(19) Europäisches Patentamt
European Patent Office
Office européen des brevets

(11) EP 2 725 075 B1

(12) **EUROPEAN PATENT SPECIFICATION**

(45) Date of publication and mention of the grant of the patent:
**26.07.2017 Bulletin 2017/30**

(51) Int Cl.:
***C09D 11/101*** *(2014.01)* ***C09D 11/38*** *(2014.01)*
***C09D 11/322*** *(2014.01)*

(21) Application number: **12189786.2**

(22) Date of filing: **24.10.2012**

(54) **Radiation curable inkjet inks**

Strahlungshärtbare Tintenstrahltinten

Encres pour jet d'encre durcissables par rayonnement

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.04.2014 Bulletin 2014/18**

(73) Proprietor: **AGFA-GEVAERT**
**2640 Mortsel (BE)**

(72) Inventors:
- **Loccufier, Johan**
  **2640 Mortsel (BE)**
- **Torfs, Rita**
  **2640 Mortsel (BE)**

(56) References cited:
**US-A1- 2003 199 655** **US-A1- 2010 313 782**
**US-A1- 2012 189 822**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 725 075 B1

## Description

### Technical Field

The present invention relates to radiation curable compositions having an excellent adhesion performance and scratch resistance in combination with an excellent storage stability, especially for legend printing in printed circuit board production.

### Background Art

Legend printing (or nomenclature printing) is the final step in the printed circuit board production before assembling the electronic components onto the printed circuit board (PCB). The legend indicates component designators, switch setting requirements, test points, and other features helpful in assembling, testing, and servicing the circuit board. It is printed in a contrasting colour, such as white or yellow, on a usually green coloured solder mask. The solder mask is a polymeric layer providing a permanent protection for the copper traces of a printed circuit board and prevents solder from bridging between conductors, thereby preventing short circuits.

Legend inks have to meet extreme criteria for adhesion and scratch resistance, while the inert smooth surface of a fully cured glossy solder mask is generally perceived as a difficult substrate to be printed upon. UV curable inks for legend printing have been disclosed in e.g. WO 02/46323 (PRINTAR), WO 2006/035679 (TAIYO INK) and KR 20090084057 (KOREA TAEYANG INK).

For any industrial ink jet application ink, the shelf life during storage and printing is crucial to guarantee reliability during production. In addition, legend inks have to withstand the extreme conditions of temperature and humidity and have to exhibit resistance to various solvents (e.g. isopropyl alcohol). For example, the ink should withstand dipping in a solder bath of 250-260 °C.

US 2012189822 (SEIKO EPSON) discloses a radiation-curable inkjet ink containing 5 wt% to 20 wt% of N-vinylcaprolactam and 2-(2-vinyloxyethoxy)ethyl acrylate. The ink is applied to a package substrate or a semiconductor substrate, exposed to radiation, and then subjected to a heat treatment at a temperature in a range of 150°C to 200°C. For ensuring ejection stability, paragraph [0112] discloses heating of the ink in order to have the preferred viscosity before ejection. Adjusting the jetting temperature in function of the measured ink viscosity, is not a viable economical solution for an industrial ink jet application.

There is still a need for radiation curable legend inkjet inks having an improved adhesion performance and scratch resistance in combination with an excellent storage stability.

### Summary of invention

In order to overcome the problems described above, preferred embodiments of the present invention have been realised with a radiation curable inkjet ink as defined by claim 1.

Preferred embodiments of the invention have also been realized with an inkjet printing method as defined below.

It was found that a radiation curable ink jet ink comprising a vinylether (meth)acrylate monomer and a monomer including a five membered cyclic anhydride curable by free radical polymerization exhibited excellent adhesion and scratch resistance on fully cured solder masks. However, upon prolonged printing in a humid and hot environment, the ink viscosity increased up to a level where reliable jetting was no longer possible. It was surprisingly found that by including also an aliphatic tertiary amine in the radiation curable ink jet ink that excellent adhesion, scratch resistance and storage stability were obtained in the humid, hot environment.

Further objects of the invention will become apparent from the description hereinafter.

### Description of embodiments

Definitions

The term "alkyl" means all variants possible for each number of carbon atoms in the alkyl group i.e. methyl, ethyl, for three carbon atoms: n-propyl and isopropyl; for four carbon atoms: n-butyl, 1-isobutyl, 2-isobutyl and tertiary-butyl; for five carbon atoms: n-pentyl, 1,1-dimethyl-propyl, 2,2-dimethylpropyl and 2-methyl-butyl.

Unless otherwise specified a substituted or unsubstituted alkyl group is preferably a $C_1$ to $C_6$-alkyl group.

Unless otherwise specified a substituted or unsubstituted alkenyl group is preferably a $C_2$ to $C_6$-alkenyl group.

Unless otherwise specified a substituted or unsubstituted alkynyl group is preferably a $C_2$ to $C_6$-alkynyl group.

Unless otherwise specified a substituted or unsubstituted aralkyl group is preferably phenyl group or naphthyl group including one, two, three or more $C_1$ to $C_6$-alkyl groups.

Unless otherwise specified a substituted or unsubstituted alkaryl group is preferably a $C_1$ to $C_6$-alkyl group including an aryl group, preferably a phenyl group or naphthyl group.

Unless otherwise specified a substituted or unsubstituted aryl group is preferably a substituted or unsubstituted phenyl group or naphthyl group.

A cyclic group includes at least one ring structure and may be a monocyclic- or polycyclic group, meaning one or more rings fused together.

A heterocyclic group is a cyclic group that has atoms of at least two different elements as members of its ring(s).The counterparts of heterocyclic groups are homocyclic groups, the ring structures of which are made of carbon only. Unless otherwise specified a substituted or unsubstituted heterocyclic group is preferably a five- or six-membered ring substituted by one, two, three or four heteroatoms, preferably selected from oxygen atoms, nitrogen atoms, sulphur atoms, selenium atoms or combinations thereof.

An alicyclic group is a non-aromatic homocyclic group wherein the ring atoms consist of carbon atoms.

The term "heteroaryl group" means a monocyclic- or polycyclic aromatic ring comprising carbon atoms and one or more heteroatoms in the ring structure, preferably, 1 to 4 heteroatoms, independently selected from nitrogen, oxygen, selenium and sulphur. Preferred examples of heteroaryl groups include, but are not limited to, pyridinyl, pyridazinyl, pyrimidyl, pyrazyl, triazinyl, pyrrolyl, pyrazolyl, imidazolyl, (1,2,3,)- and (1,2,4)-triazolyl, pyrazinyl, pyrimidinyl, tetrazolyl, furyl, thienyl, isoxazolyl, thiazolyl, isoxazolyl, and oxazolyl. A heteroaryl group can be unsubstituted or substituted with one, two or more suitable substituents. Preferably, a heteroaryl group is a monocyclic ring, wherein the ring comprises 1 to 5 carbon atoms and 1 to 4 heteroatoms.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms.

Unless otherwise specified a substituted alkyl group, a substituted alkenyl group, a substituted alkynyl group, a substituted aralkyl group, a substituted alkaryl group, a substituted aryl, a substituted heteroaryl and a substituted heterocyclic group are preferably substituted by one or more substituents selected from the group consisting of methyl, ethyl, n-propyl, isopropyl, n-butyl, 1-isobutyl, 2-isobutyl and tertiary-butyl, ester, amide, ether, thioether, ketone, aldehyde, sulfoxide, sulfone, sulfonate ester, sulfonamide, -Cl, -Br, -I, -OH, -SH, -CN and $-NO_2$.

Radiation Curable Inks

The radiation curable ink according to the invention contains a) a monomer including at least one vinyl ether group and at least one (meth)acrylate group; b) a monomer including a five membered cyclic anhydride curable by free radical polymerization; and c) an aliphatic tertiary amine.

In a particularly preferred embodiment, the radiation curable ink is a radiation curable inkjet ink.

The radiation curable ink preferably includes a colorant. The colorant can be a dye, but is preferably a pigment. The pigmented radiation curable ink preferably contains a dispersant, more preferably a polymeric dispersant, for dispersing the pigment. The pigmented radiation curable ink may contain a dispersion synergist to improve the dispersion quality and stability of the ink.

The radiation curable ink of the present invention may be a hybrid curable ink, i.e. containing both cationic photoinitiators and free radical photoinitiators for generating the initiating species for cationic respectively free radical polymerization, but preferably the radiation curable ink is curable by free radical polymerization only.

It was found in industrial inkjet printing systems that cationically curable inkjet inks posed problems of jetting reliability due to UV stray light. UV stray light hitting the nozzle plate of an inkjet print head results into failing nozzles due to clogging by cured ink in the nozzle. Unlike free radical ink where radical species have a much shorter lifetime, the cationic curable ink continues to cure once an acid species has been generated by UV light in the nozzle.

In a preferred embodiment, the photoinitiator in the free radical radiation curable (inkjet) ink is a polymeric or a polymerizable photoinitiator. This is especially advantageous for minimizing health risks.

In a more preferred embodiment of the above radiation curable (inkjet) ink, the photoinitiator in the free radical radiation curable ink is a polymerizable photoinitiator.

The radiation curable (inkjet) ink may be of a radiation curable (inkjet) ink set. Such a curable ink set preferably includes at least one yellow curable ink (Y), at least one cyan curable ink (C) and at least one magenta curable ink (M) and preferably also at least one black curable ink (K). The curable CMYK-ink set may also be extended with extra inks such as red, green, blue, and/or orange to further enlarge the colour gamut. The CMYK ink set may also be extended by the combination of full density (inkjet) inks with light density (inkjet) inks. The combination of dark and light colour inks and/or black and grey inks improves the image quality by a lowered graininess.

The static surface tension of a jettable free radical radiation curable ink is preferably from 20 to 40 mN/m, more preferably from 22 to 35 mN/m. It is preferably not more than 30 mN/m from the viewpoint of the wettability.

The radiation curable inkjet ink preferably also contains at least one surfactant so that the dynamic surface

tension is no more than 30 mN/m measured by maximum bubble pressure tensiometry at a surface age of 50 ms and at 25°C.

For having a good ejecting ability and fast inkjet printing, the viscosity of the radiation curable inkjet ink at the temperature of 45°C is preferably smaller than 30 mPa.s, more preferably smaller than 15 mPa.s, and most preferably between 1 and 13 mPa.s all at a shear rate of 1000 $s^{-1}$. A preferred jetting temperature is between 10 and 70°C, more preferably between 25 and 50°C, and most preferably between 35 and 45°C.

The radiation curable inkjet ink preferably includes 60 to 95 wt% of polymerizable compounds, more preferably 70 to 90 wt% of polymerizable compounds based upon the total weight of the radiation curable inkjet ink.

Vinylether (Meth)acrylate Monomers

A vinylether (meth)acrylate monomer is a monomer having at least one (meth)acrylate group and at least one vinylether group.

The vinylether (meth)acrylate monomer is preferably a monomer represented by Formula (I):

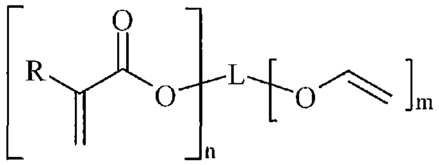

Formula (I)

wherein,

R represents hydrogen or a methyl group;
L represents a linking group comprising at least one carbon atom; and
n and m independently represent a value from 1 to 5.

In a preferred embodiment, the vinylether (meth)acrylate monomer is a monomer according to Formula (II) :

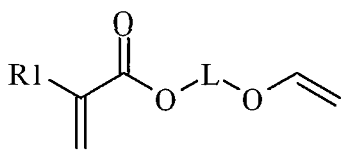

Formula (II),

wherein R1 represents hydrogen or a methyl group; and L represents a divalent linking group comprising at least two carbon atoms.

In a further preferred embodiment, the vinylether (meth)acrylate monomer is a monomer according to Formula (III) :

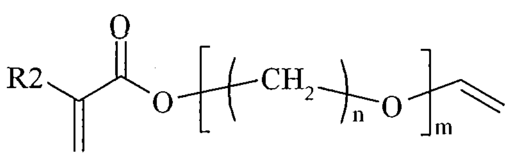

Formula (III),

wherein R2 represents hydrogen or a methyl group; n represents an integer from 2 to 6; and m represents an integer from 1 to 4.

In an even more preferred embodiment, the vinylether (meth)acrylate monomer is selected from the group consisting of 2-vinyloxyethyl acrylate, 2-vinyloxyethyl methacrylate, 2-(2-vinyloxyethoxy)ethyl acrylate and 2-(2-vinyloxyethoxy)ethyl methacrylate. Most preferably, the vinylether (meth)acrylate monomer is 2-(2-vinyloxyethoxy)ethyl acrylate (VEEA).

The monomer having at least one (meth)acrylate group and at least one vinylether group is preferably present in the radiation curable ink in a concentration between 20 wt% and 80 wt%, more preferably between 30 wt% and 70

wt% most preferably between 40 wt% and 60 wt% based on the total weight of the radiation curable ink.

Five Membered Cyclic Anhydride Monomers

The radiation curable ink according to the invention contains a monomer including a five membered cyclic anhydride curable by free radical polymerization.

The monomer including a five membered cyclic anhydride is preferably selected from the group consisting of an itaconic anhydride derivative and a maleic anhydride derivative, a maleic anhydride derivative being more preferred.

In preferred embodiment, the maleic anhydride derivative has a structure according to Formula (IV):

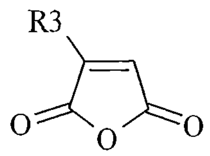 Formula (IV),

wherein R3 is selected from the group consisting of a hydrogen, a substituted or unsubstituted aryl group and a substituted or unsubstituted alkyl group, a hydrogen being particularly preferred.

Suitable examples of the monomers including a five membered cyclic anhydride are given in Table 1, without being limited thereto.

**Table 1**

| | |
|---|---|
| 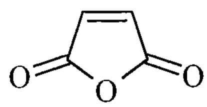 | Anhydride-1 |
| 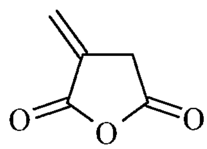 | Anhydride-2 |
| 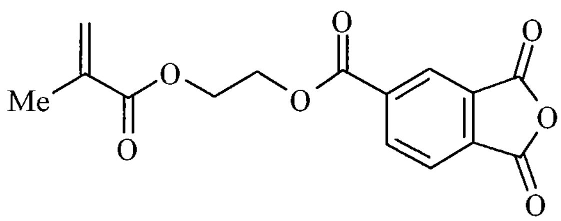 | Anhydride-3 |
| 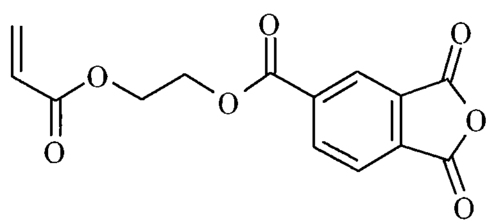 | Anhydride-4 |
| 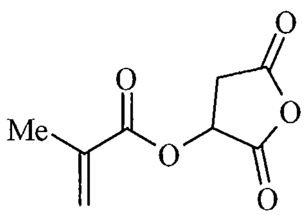 | Anhydride-5 |

(continued)

| | |
|---|---|
| 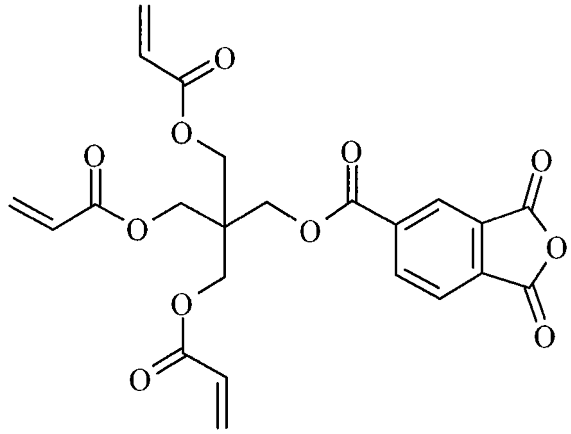 | Anhydride-6 |
| 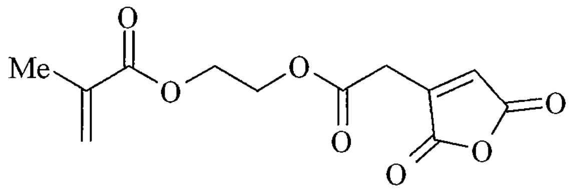 | Anhydride-7 |
| 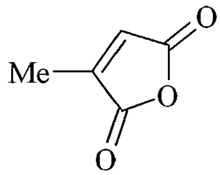 | Anhydride-8 |
| 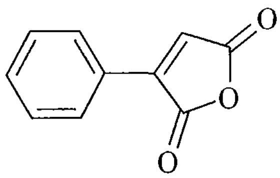 | Anhydride-9 |

The monomer including a five membered cyclic anhydride curable by free radical polymerization is preferably present in the radiation curable ink in a concentration between 0.5 wt% and 5.0 wt%, more preferably between 0.7 wt% and 3.0 wt% and most preferably between 1.0 wt% and 2.0 wt% based on the total weight of the radiation curable ink.

Other Monomers and Oligomers

Any monomer or oligomer capable of free radical polymerization may be used in addition to the vinylether (meth)acrylate monomer and the monomer including a five membered cyclic anhydride.

A combination of monomers and oligomers may also be used. The monomers and oligomers may possess different degrees of functionality, and a mixture including combinations of mono-, di-, tri-and higher functionality monomers and oligomers may be used. The viscosity of the radiation curable inks can be adjusted by varying the ratio between the monomers and oligomers.

Particularly preferred monomers and oligomers are those listed in [0106] to [0115] in EP 1911814 A (AGFA) .

Aliphatic Tertiary Amines

An aliphatic tertiary amine has all three hydrogen atoms replaced by organic substituents and has no aromatic ring attached directly to the nitrogen atom. Aromatic amines have the nitrogen atom connected to an aromatic ring as in for example aniline. The aliphatic tertiary amine may also be a cyclic amine as in for example the six-membered ring piperidine.

The aliphatic tertiary amine preferably has a molecular weight of at least 150 Dalton and more preferably a

molecular weight of at least 200 Dalton. If the aliphatic tertiary amine has a molecular weight smaller than 150 Dalton, then it becomes too volatile.

The aliphatic tertiary amine preferably has a molecular weight of less then 1500 Dalton, more preferably less then 1000 Dalton and most preferably less then 750 Dalton. If the aliphatic tertiary amine has a molecular weight larger than 1500 Dalton, then it increases the ink viscosity too much.

The tertiary aliphatic amine preferably has a boiling point of at least 150°C and more preferably of at least 200°C at atmospheric pressure. If the aliphatic tertiary amine has a boiling point of less than150°C, then it becomes too volatile.

In a preferred embodiment, the aliphatic tertiary amine comprises at least two tertiary aliphatic amines.

In an even more preferred embodiment, said aliphatic tertiary amine is selected from the group consisting of a piperidine derivative, a piperazine derivative and a morpholine derivative, a morpholine derivative being particularly preferred.

The aliphatic tertiary amine may further contain additional functional groups such as a free radical polymerizable group, a photoinitiating moiety or an additional aromatic coinitiator moiety.

Suitable aliphatic tertiary amines useful in the radiation curable inks according to the present invention are given in Table 2, without being limited thereto.

**Table 2**

| | |
|---|---|
| 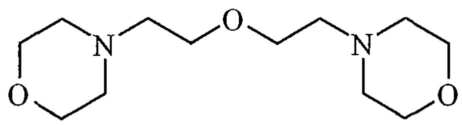 | Amine-1 |
| 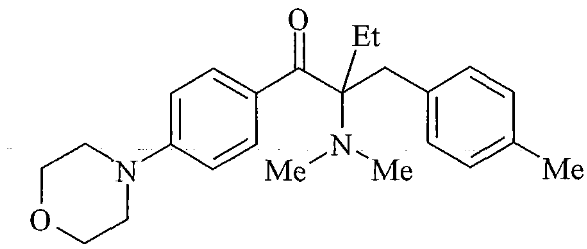 | Amine-2 |
| 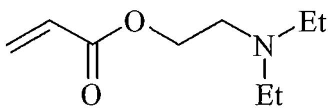 | Amine-3 |
| | Amine-4 |
| 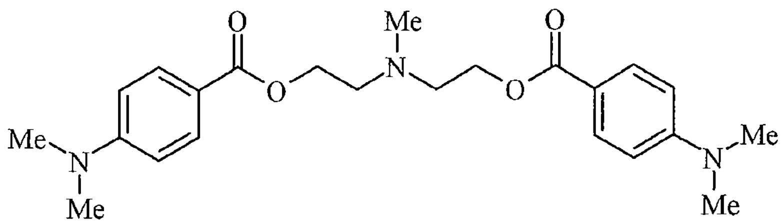 | |
| 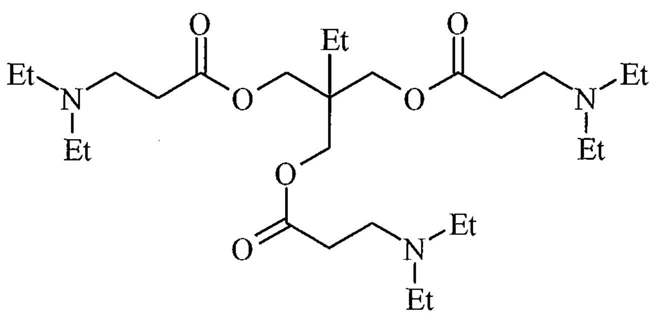 | Amine-5 |

(continued)

| | |
|---|---|
| 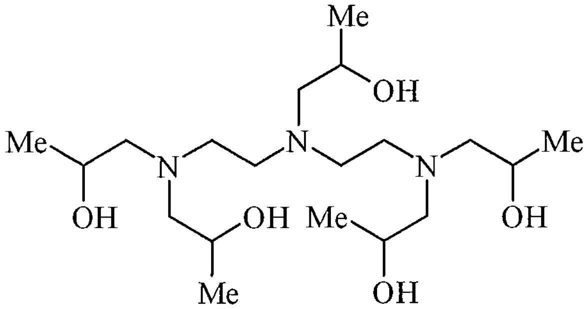 | Amine-6 |
| 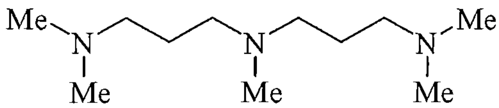 | Amine-7 |
| 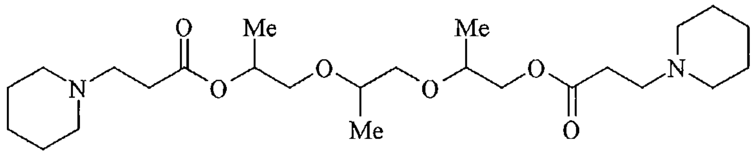 | Amine-8 |
| 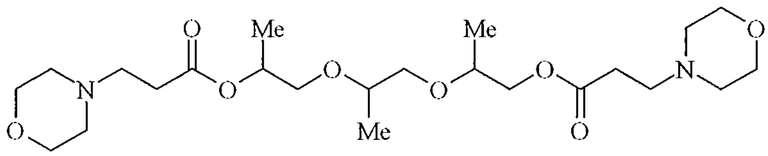 | Amine-9 |
| 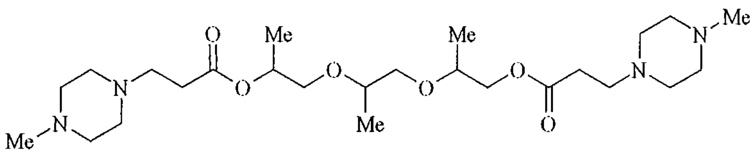 | Amine-10 |
| 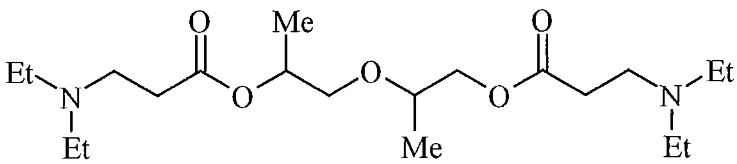 | Amine-11 |
| 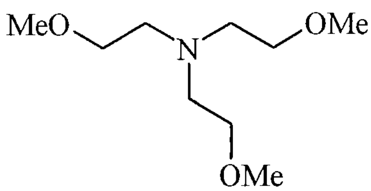 | Amine-12 |

The radiation curable ink according to the present invention preferably contains between 0.5 wt% and 4 wt% of the aliphatic tertiary amine, more preferably between 0.75 wt% and 3 wt% and most preferably between 1 wt% and 2.5 wt% based on the total weight of the radiation curable composition.

Photoinitiators and Co-Initiators

The radiation curable ink preferably also contains an initiator for initiating the polymerization reaction. The initiator can be a thermal initiator, but is preferably a photo-initiator. A photo-initiator requires less energy to activate

than the monomers and oligomers to form a polymer. The photo-initiator in the curable inkjet ink is preferably a Norrish type I initiator or a Norrish type II initiator. A combination of different types of initiator, for example, a photo-initiator and a thermal initiator can also be used.

In a preferred embodiment, the radiation curable ink includes a photoinitiating system including two or more photoinitiators and optionally one or more co-initiators.

The photoinitiating system is preferably a non-yellowing photoinitiating system, especially if the radiation curable ink is a white ink. In a preferred embodiment, the photoinitiating system includes one or more photoinitiators selected from the group consisting of acyl phosphine oxide photoinitiators, aromatic α-hydroxy ketones and benzophenone photoinitiators, acyl phosphine oxide photoinitiators being particularly preferred.

Thermal initiator(s) suitable for use in the curable (inkjet) ink include tert-amyl peroxybenzoate, 4,4-azobis(4-cyanovaleric acid), 1,1'-azobis(cyclohexanecarbonitrile), 2,2'-azobisisobutyronitrile (AIBN), benzoyl peroxide, 2,2-bis(tert-butylperoxy)butane, 1,1-bis(tert-butylperoxy)cyclohexane,1,1-bis(tert-butylperoxy)cyclohexane, 2,5-bis( tert-butylperoxy)-2,5-dimethylhexane, 2,5-bis(tert-butylperoxy)-2,5-dimethyl-3-hexyne, bis(1-(tert-butylperoxy)-1-methylethyl)benzene, 1,1-bis(tert-butylperoxy)-3,3,5-trimethylcyclohexane, tert-butyl hydroperoxide, tert-butyl peracetate, tert-butyl peroxide, tert-butyl peroxybenzoate, tert-butylperoxy isopropyl carbonate, cumene hydroperoxide, cyclohexanone peroxide, dicumyl peroxide, lauroyl peroxide, 2,4- pentanedione peroxide, peracetic acid and potassium persulfate.

In a preferred embodiment, the photoinitiator is a free radical initiator. A free radical photoinitiator is a chemical compound that initiates polymerization of monomers and oligomers when exposed to actinic radiation by the formation of a free radical. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention, alone or in combination.

Suitable photo-initiators are disclosed in CRIVELLO, J.V., et al. VOLUME III: Photoinitiators for Free Radical Cationic & Anionic Photopolymerisation. 2nd edition. Edited by BRADLEY, G.. London,UK: John Wiley and Sons Ltd, 1998. p.287-294.

Specific examples of photo-initiators may include, but are not limited to, the following compounds or combinations thereof: benzophenone and substituted benzophenones, 1-hydroxycyclohexyl phenyl ketone, thioxanthones such as isopropylthioxanthone, 2-hydroxy-2-methyl-1-phenylpropan-1-one, 2-benzyl-2-dimethylamino- (4-morpholinophenyl) butan-1-one, benzil dimethylketal, bis (2,6- dimethylbenzoyl) -2,4, 4-trimethylpentylphosphine oxide, 2,4,6trimethylbenzoyldiphenylphosphine oxide, 2-methyl-1- [4- (methylthio) phenyl] -2-morpholinopropan-1-one, 2,2-dimethoxy-1, 2-diphenylethan-1-one or 5,7-diiodo-3- butoxy-6-fluorone.

Suitable commercial photo-initiators include Irgacure™ 184, Irgacure™ 500, Irgacure™ 907, Irgacure™ 369, Irgacure™ 1700, Irgacure™ 651, Irgacure™ 819, Irgacure™ 1000, Irgacure™ 1300, Irgacure™ 1870, Darocur™ 1173, Darocur™ 2959, Darocur™ 4265 and Darocur™ ITX available from CIBA SPECIALTY CHEMICALS, Lucerin™ TPO available from BASF AG, Esacure™ KT046, Esacure™ KIP150, Esacure™ KT37 and Esacure™ EDB available from LAMBERTI, H-Nu™ 470 and H-Nu™ 470X available from SPECTRA GROUP Ltd..

For safety reasons, the photoinitiator is preferably a so-called diffusion hindered photoinitiator. A diffusion hindered photoinitiator is a photoinitiator which exhibits a much lower mobility in a cured layer of the radiation curable ink than a monofunctional photoinitiator, such as benzophenone. Several methods can be used to lower the mobility of the photoinitiator. One way is to increase the molecular weight of the photoinitiator so that the diffusion speed is reduced, e.g. polymeric photoinitiators. Another way is to increase its reactivity so that it is built into the polymerizing network, e.g. multifunctional photoinitiators (having 2, 3 or more photoinitiating groups) and polymerizable photoinitiators. The diffusion hindered photoinitiator is preferably selected from the group consisting of non-polymeric multifunctional photoinitiators, oligomeric or polymeric photoinitiators and polymerizable photoinitiators. Non-polymeric di- or multifunctional photoinitiators are considered to have a molecular weight between 300 and 900 Dalton. Non-polymerizable monofunctional photoinitiators with a molecular weight in that range are not diffusion hindered photoinitiators. Most preferably the diffusion hindered photoinitiator is a polymerizable initiator.

A suitable diffusion hindered photoinitiator may contain one or more photoinitiating functional groups derived from a Norrish type I-photoinitiator selected from the group consisting of benzoinethers, benzil ketals, α,α-dialkoxyacetophenones, α-hydroxyalkylphenones, α-aminoalkylphenones, acylphosphine oxides, acylphosphine sulfides, α-haloketones, α-halosulfones and phenylglyoxalates.

A suitable diffusion hindered photoinitiator may contain one or more photoinitiating functional groups derived from a Norrish type II-initiator selected from the group consisting of benzophenones, thioxanthones, 1,2-diketones and anthraquinones.

Suitable diffusion hindered photoinitiators are also those disclosed in EP 2065362 A (AGFA) in paragraphs [0074] and [0075] for difunctional and multifunctional photoinitiators, in paragraphs [0077] to [0080] for polymeric photoinitiators and in paragraphs [0081] to [0083] for polymerizable photoinitiators.

Other preferred polymerizable photoinitiators are those disclosed in EP 2065362 A (AGFA) and EP 2161264 A (AGFA).

A preferred amount of photoinitiator is 0 - 50 wt%, more preferably 0.1 - 20 wt%, and most preferably 0.3 - 15 wt% of the total weight of the curable pigment dispersion or ink.

In order to increase the photosensitivity further, the radiation curable ink may additionally contain co-initiators. The preferred co-initiators are aromatic amines, more preferably aminobenzoates.

When one or more co-initiators are included into the radiation curable ink, preferably these co-initiators are diffusion hindered for safety reasons.

A diffusion hindered co-initiator is preferably selected from the group consisting of non-polymeric di- or multifunctional co-initiators, oligomeric or polymeric co-initiators and polymerizable co-initiators. More preferably the diffusion hindered co-initiator is selected from the group consisting of polymeric co-initiators and polymerizable co-initiators. Most preferably the diffusion hindered co-initiator is a polymerizable co-initiator having at least one (meth)acrylate group, more preferably having at least one acrylate group.

Preferred diffusion hindered co-initiators are the polymerizable co-initiators disclosed in EP 2053101 A (AGFA GRAPHICS) in paragraphs [0088] and [0097].

Preferred diffusion hindered co-initiators include a polymeric co-initiator having a dendritic polymeric architecture, more preferably a hyperbranched polymeric architecture. Preferred hyperbranched polymeric co-initiators are those disclosed in US 2006014848 (AGFA).

The radiation curable ink preferably comprises the (diffusion hindered) co-initiator in an amount of 0.1 to 50 wt%, more preferably in an amount of 0.5 to 25 wt%, most preferably in an amount of 1 to 10 wt% of the total weight of the radiation curable ink.

Polymerization Inhibitors

The radiation curable (inkjet) ink may contain a polymerization inhibitor. Suitable polymerization inhibitors include phenol type antioxidants, hindered amine light stabilizers, phosphor type antioxidants, hydroquinone monomethyl ether commonly used in (meth)acrylate monomers, and hydroquinone, t-butylcatechol, pyrogallol may also be used.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

Since excessive addition of these polymerization inhibitors will lower the ink sensitivity to curing, it is preferred that the amount capable of preventing polymerization is determined prior to blending. The amount of a polymerization inhibitor is preferably lower than 2 wt% of the total weight of the radiation curable (inkjet) ink.

Colorants

The radiation curable ink may be a colourless ink, but preferably the radiation curable ink includes a colorant. The colorant in the radiation curable (inkjet) ink can be a dye but is preferably a pigment.

The pigments may be black, white, cyan, magenta, yellow, red, orange, violet, blue, green, brown, mixtures thereof, and the like. A colour pigment may be chosen from those disclosed by HERBST, Willy, et al. Industrial Organic Pigments, Production, Properties, Applications. 3rd edition. Wiley - VCH , 2004. ISBN 3527305769.

Preferred pigments are disclosed in paragraphs [0128] to [0138] of WO 2008/074548 (AGFA).

Particularly referred pigments include as red or magenta pigments, Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, 36, as blue or cyanogen pigments, Pigment Blue 1, 15, 15:1, 15:2, 15:3, 15:4, 15:6, 16, 17-1, 22, 27, 28, 29, 36, 60, as green pigments, Pigment Green 7, 26, 36, 50, as yellow pigments, Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, 193, as black pigments, Pigment Black 7, 28, 26, as white pigments, Pigment White 6, 18 and 21.

Also mixed crystals may be used. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the

formation of solid solutions. A commercially available example is Cinquasia™ Magenta RT-355-D from Ciba Specialty Chemicals.

Also mixtures of pigments may be used. For example, the radiation curable inkjet ink may include a black pigment and at least one pigment selected from the group consisting of a blue pigment, a cyan pigment, magenta pigment and a red pigment. It was found that such a black inkjet ink led to a better readable legend on the recently emerging white solder masks.

Pigment particles in inkjet inks should be sufficiently small to permit free flow of the ink through the inkjet-printing device, especially at the ejecting nozzles. It is also desirable to use small particles for maximum colour strength and to slow down sedimentation.

The numeric average pigment particle size is preferably between 0.050 and 1 μm, more preferably between 0.070 and 0.300 μm and particularly preferably between 0.080 and 0.200 μm. Most preferably, the numeric average pigment particle size is no larger than 0.200 μm. An average particle size smaller than 0.050 μm is less desirable for decreased fastness, but mainly also because very small pigment particles or individual pigment molecules thereof may still migrate into the food packaging applications. The average particle size of pigment particles is determined with a Brookhaven Instruments Particle Sizer BI90plus based upon the principle of dynamic light scattering. The ink is diluted with ethyl acetate to a pigment concentration of 0.002 wt%. The measurement settings of the BI90plus are: 5 runs at 23°C, angle of 90°, wavelength of 635 nm and graphics = correction function

However for white pigment inkjet inks, the numeric average particle diameter of the white pigment is preferably from 50 to 500 nm, more preferably from 150 to 400 nm, and most preferably from 200 to 350 nm. Sufficient hiding power cannot be obtained when the average diameter is less than 50 nm, and the storage ability and the jet-out suitability of the ink tend to be degraded when the average diameter exceeds 500 nm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern™ nano-S available from Goffin-Meyvis. A sample can, for example, be prepared by addition of one drop of ink to a cuvette containing 1.5 mL ethyl acetate and mixed until a homogenous sample was obtained. The measured particle size is the average value of 3 consecutive measurements consisting of 6 runs of 20 seconds.

In a particularly preferred embodiment, the colorant in the radiation curable (inkjet) ink is a white pigment, preferably titanium dioxide. In another particularly preferred embodiment, the colorant in the radiation curable (inkjet) ink is a yellow pigment, preferably C.I. Pigment Yellow 150. On a green solder mask, a white or yellow colour results in excellent contrast and thus good readable legends.

Suitable white pigments are given by Table 2 in [0116] of WO 2008/074548 (AGFA). The white pigment is preferably a pigment with a refractive index greater than 1.60. The white pigments may be employed singly or in combination. Preferably titanium dioxide is used as pigment with a refractive index greater than 1.60. Preferred titanium dioxide pigments are those disclosed in [0117] and in [0118] of WO 2008/074548 (AGFA).

The pigments are preferably present in the range of 0.01 to 15 wt%, more preferably in the range of 0.05 to 10 wt% by weight and most preferably in the range of 0.1 to 8 wt% by weight, each based on the total weight of the radiation curable ink. The white pigment is preferably present in an amount of 3 wt% to 40 wt% by weight of the pigment dispersion, and more preferably 5 wt% to 35 wt%. An amount of less than 3 wt% by weight cannot achieve sufficient covering power and usually exhibits very poor storage stability and ejection properties.

In a preferred embodiment, the white inkjet ink includes a white pigment with a refractive index greater than 1.60 having an average particle size larger than 200 nm, and a second inorganic pigment having an average particle size between 40 nm and 90 nm. In a more preferred embodiment, the white pigment with a refractive index greater than 1.60 having an average particle size larger than 200 nm, and the second inorganic pigment having an average particle size between 40 nm and 90 nm are both titanium dioxide.

Polymeric Dispersants

The pigmented radiation curable ink preferably contains a dispersant, more preferably a polymeric dispersant, for dispersing the pigment. The pigmented radiation curable ink may contain a dispersion synergist to improve the dispersion quality and stability of the ink.

Suitable polymeric dispersants are copolymers of two monomers but they may contain three, four, five or even more monomers. The properties of polymeric dispersants depend on both the nature of the monomers and their distribution in the polymer. Copolymeric dispersants preferably have the following polymer compositions:

- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of

the blocks (2, 3, 4, 5 or even more) is important for the dispersion capability of the polymeric dispersant;

- graft copolymers (graft copolymers consist of a polymeric backbone with polymeric side chains attached to the backbone); and
- mixed forms of these polymers, e.g. blocky gradient copolymers.

Suitable polymeric dispersants are listed in the section on "Dispersants", more specifically [0064] to [0070] and [0074] to [0077], in EP 1911814 A (AGFA).

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:

- DISPERBYK™ dispersants available from BYK CHEMIE GMBH;
- SOLSPERSE™ dispersants available from NOVEON;
- TEGO™ DISPERS™ dispersants from EVONIK;
- EDAPLAN™ dispersants from MÜNZING CHEMIE;
- ETHACRYL™ dispersants from LYONDELL;
- GANEX™ dispersants from ISP;
- DISPEX™ and EFKA™ dispersants from CIBA SPECIALTY CHEMICALS INC;
- DISPONER™ dispersants from DEUCHEM; and
- JONCRYL™ dispersants from JOHNSON POLYMER.

Particularly preferred polymeric dispersants include Solsperse™ dispersants from NOVEON, Efka™ dispersants from CIBA SPECIALTY CHEMICALS INC and Disperbyk™ dispersants from BYK CHEMIE GMBH. Particularly preferred dispersants are Solsperse™ 32000, 35000 and 39000 dispersants from NOVEON. The polymeric dispersant is preferably used in an amount of 2 to 600 wt%, more preferably 5 to 200 wt%, most preferably 50 to 90 wt% based on the weight of the pigment.

<u>Surfactants</u>

The free radical curable ink may contain at least one surfactant. The surfactant can be anionic, cationic, nonionic, or zwitter-ionic and is usually added in a total quantity less than 3 wt% based on the total weight of the ink and particularly in a total less than 1wt% based on the total weight of the free radical curable (inkjet) ink.

Suitable surfactants include fluorinated surfactants, fatty acid salts, ester salts of a higher alcohol, alkylbenzene sulfonate salts, sulfosuccinate ester salts and phosphate ester salts of a higher alcohol (for example, sodium dodecylbenzenesulfonate and sodium dioctylsulfosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL™ 104, 104H, 440, 465 and TG available from AIR PRODUCTS & CHEMICALS INC.).

Preferred surfactants are selected from fluoro surfactants (such as fluorinated hydrocarbons) and silicone surfactants. The silicone surfactants are preferably siloxanes and can be alkoxylated, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK™ 333 and BYK™ UV3510 from BYK Chemie.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: Ebecryl™ 350 , a silicone diacrylate from Cytec; the polyether modified acrylated polydimethylsiloxane BYK™ UV3500 and BYK™ UV3530, the polyester modified acrylated polydimethylsiloxane BYK™ UV3570, all manufactured by BYK Chemie; Tego™ Rad 2100, Tego™ Rad 2200N, Tego™ Rad 2250N, Tego™ Rad 2300, Tego™ Rad 2500, Tego™ Rad 2600, and Tego™ Rad 2700, Tego™ RC711 from EVONIK; Silaplane™ FM7711, Silaplane™ FM7721, Silaplane™ FM7731, Silaplane™

FM0711, Silaplane™ FM0721, Silaplane™ FM0725, Silaplane™ TM0701, Silaplane™ TM0701T all manufactured by Chisso Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by Gelest, Inc..

Preparation of Inkjet Inks

The preparation of pigmented radiation curable inkjet inks is well-known to the skilled person. Preferred methods of preparation are disclosed in paragraphs [0076] to [0085] of WO 2011/069943 (AGFA).

Inkjet Printing Methods

The radiation curable ink as described above is preferably used in an inkjet printing method. The method of inkjet printing in a preferred embodiment of the present invention includes the steps of: 1) jetting on a substrate a radiation curable ink containing: a) a monomer including at least one vinyl ether group and at least one (meth)acrylate group; b) a monomer including a five membered cyclic anhydride curable by free radical polymerization; and c) an aliphatic tertiary amine; and 2) curing the jetted radiation curable ink.

In a preferred embodiment of the inkjet printing method, the substrate for jetting the radiation curable ink upon is a solder mask.

In a preferred embodiment of the inkjet printing method, the curing is performed using ultraviolet radiation.

Inkjet Printing Devices

The radiation curable inks may be jetted by one or more print heads ejecting small droplets in a controlled manner through nozzles onto a substrate, which is moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with ink. When the voltage is again removed, the ceramic expands to its original shape, ejecting a drop of ink from the print head. However the inkjet printing method according to the present invention is not restricted to piezoelectric inkjet printing. Other inkjet print heads can be used and include various types, such as a continuous type.

The inkjet print head normally scans back and forth in a transversal direction across the moving ink-receiver surface. Often the inkjet print head does not print on the way back. Bi-directional printing is preferred for obtaining a high areal throughput. Another preferred printing method is by a "single pass printing process", which can be performed by using page wide inkjet print heads or multiple staggered inkjet print heads which cover the entire width of the ink-receiver surface. In a single pass printing process the inkjet print heads usually remain stationary and the substrate surface is transported under the inkjet print heads.

For solder masks and PCB's, preferably the inkjet printing is performed by a single pass printing process.

Curing Devices

The radiation curable inks can be cured by exposing them to actinic radiation, preferably by ultraviolet radiation.

In inkjet printing, the curing means may be arranged in combination with the print head of the inkjet printer, travelling therewith so that the curable liquid is exposed to curing radiation very shortly after been jetted.

In such an arrangement it can be difficult to provide a small enough radiation source connected to and travelling with the print head, such as LED. Therefore, a static fixed radiation source may be employed, e.g. a source of curing UV-light, connected to the radiation source by means of flexible radiation conductive means such as a fiber optic bundle or an internally reflective flexible tube.

Alternatively, the actinic radiation may be supplied from a fixed source to the radiation head by an arrangement of mirrors including a mirror upon the radiation head.

The source of radiation may also be an elongated radiation source extending transversely across the substrate to be cured. It may be adjacent the transverse path of the print head so that the subsequent rows of images formed by the print head are passed, stepwise or continually, beneath that radiation source.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:

- UV-A: 400 nm to 320 nm
- UV-B: 320 nm to 290 nm
- UV-C: 290 nm to 100 nm.

In a preferred embodiment, the inkjet printing device contains one or more UV LEDs with a wavelength larger than 360 nm, preferably one or more UV LEDs with a wavelength larger than 380 nm, and most preferably UV LEDs with a wavelength of about 395 nm.

Furthermore, it is possible to cure the image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages e.g. a fast curing speed and a high curing degree.

For facilitating curing, the inkjet printing device often includes one or more oxygen depletion units. The oxygen depletion units place a blanket of nitrogen or other relatively inert gas (e.g. $CO_2$), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

## EXAMPLES

Materials

All materials used in the following examples were readily available from standard sources such as Aldrich Chemical Co. (Belgium) and Acros (Belgium) unless otherwise specified.

TR52 is TIOXIDE TR 52™, a surface modified titanium dioxide from HUNTSMAN CHEMICAL GROUP.

RM300 is Hombitech™ RM300, a titanium dioxide having a specific surface of 70 $m^2/g$ available from SACHTLEBEN CHEMIE GmbH, a company of ROCKWOOD SPECIALTIES GROUP.

**DB162** is an abbreviation used for the polymeric dispersant Disperbyk™ 162 available from BYK CHEMIE GMBH whereof the solvent mixture of 2-methoxy-1-methylethylacetate, xylene and n-butylacetate was removed.

**SR355** is ditrimethylolpropane tetraacrylate supplied as Sartomer™ SR355 by Sartomer.

**TMPTA** is trimethylol propane triacrylate supplied as Miramer™ M300 by Rahn AG.

**VEEA** is 2-(2-vinyloxyethoxy)ethyl acrylate supplied by Nippon Shokubai.

**PEA** is 2-phenoxyethyl acrylate available as Sartomer™ SR339C from SARTOMER.

**Amine 1, Amine-6** (pentrol) and **Amine-7** are supplied by TCI.

**Amine- 5** is P-115, supplied by Hunan Xinyu.

**Amine-8** to **Amine-11** were prepared by adding 2 mol of the corresponding secondary amine to the corresponding diacrylate at 50°C for 20 hours. After cooling down to room temperature, the amines could be used without further purification.

**Eb1360** is a polysiloxane hexaacrylate supplied as Ebecryl™ 1360 by Cytec.

**KTO46** is a photoinitiator blend (trimethylbenzoyl diphenyl phosphine oxide (CASRN 75980-60-8), trimethyl benzophenone (CASRN954-16-5), methyl benzophenone (CASRN 134-84-9), a polymeric α-hydroxy ketone (CASRN 115055-18-0), 2-hydroxy-2-methyl-1-phenyl-propanone (CASRN7473-98-5)) supplied as Esacure™ KTO46 by Lamberti.

**TPO** is trimethylbenzoyl diphenyl phosphine oxide supplied as Omnirad™ TPO by IGM.

**VEEA** is 2-(2-vinyloxyethoxy)ethyl acrylate supplied by Nippon Shokubai

**INHIB** is a mixture of polymerisation inhibitor having a composition according to Table 3:

**Table 3**

| Component | wt% |
|---|---|
| DPGDA | 82.4 |
| p-methoxyphenol | 4.0 |
| 2,6-di-tert-butyl-4-methylphenol | 10.0 |
| Cupferron™ AL | 3.6 |

**Cupferron™ AL** is aluminum N-nitrosophenylhydroxylamine from WAKO CHEMICALS LTD.

**MA** is maleic anhydride supplied by CALDIC.

**IA** is Itaconic anhydride supplied by ACROS.

Measurement Methods

1. Curing sensitivity

A radiation curable ink was coated on a PET100 substrate using a bar coater with a 10 μm wired bar and cured using a Fusion DRSE-120 conveyer, equipped with a Fusion VPS/1600 lamp (D-bulb). The samples were cured using a belt speed of 20 m/min. The percentage of the maximum output of the lamp was used as a measure for the curing speed. The lower the number the higher the curing speed. A sample was considered as fully cured the moment the surface was no longer damaged when scratching with a Q-tip. For a good curing speed, the curing sensitivity should be less than 50% of the maximum output of the lamp.

2. Averaged PPH

The scratch resistance was evaluated by the pencil hardness test on a set of four PCB's coated with fully cured solder masks given below:

- solder mask 1 : Coates XV501T CC Green HF;
- solder mask 2 : Taiyo PRS4000 GP01 EU;
- solder mask 3 : Taiyo PRS4000 SP19A; and
- solder mask 4 : Taiyo PRS4000 G24K.

A radiation curable ink was coated on the four solder masks using a bar coater with a 10 μm wired bar. The coated samples were cured using a Fusion DRSE-120 conveyer, equipped with a Fusion VPS/1600 lamp (D-bulb). The samples were cured using a belt speed of 20 m/min and an output of 60% of the maximum output of the lamp. The coated and cured samples were further thermally cured for an additional hour at 150°C.

The pencil hardness of each sample was determined according to the ASTM D3363 test method. The pencil hardness was averaged for each of the radiation curable composition. For example, if the pencil hardness on the four solder masks was 7H, 8H, 8H and 9H, then the average pencil hardness PPH was averaged as 8H.

A good scratch resistance requires an averaged pencil hardness PPH of at least 6H, preferably 7H or more.

3. Adhesion

The adhesion was evaluated on the same set of four PCB's coated with fully cured solder masks as used in the the pencil hardness test above.

A radiation curable ink was coated on the four solder masks using a bar coater with a 10 μm wired bar. The coated samples were cured using a Fusion DRSE-120 conveyer, equipped with a Fusion VPS/1600 lamp (D-bulb). The samples were cured using a belt speed of 20 m/min and an output of 60% of the maximum output of the lamp. The coated and cured samples were further thermally cured for an additional hour at 150°C.

The adhesion on each sample was evaluated using a cross hatch test according to ISO2409. For each individual sample a score between 0 and 5 was given according to Table 4:

**Table 4**

| Score | Observation |
|---|---|
| 0 | The edges of the cuts are completely smooth. None of the squares of the lattice is detached. |
| 1 | Detachment of flakes of the coating at the intersections of the cuts. A cross cut area not significantly greater than 5 % is affected. |
| 2 | The coating has flaked along the edges and/or at the intersections of the cuts. A cross cut area significantly greater than 5 %, but not significantly greater than 15 % is affected. |
| 3 | The coating has flaked along the edges of the cuts partly or wholly in large ribbons, and/or it has flaked partly or wholly on different parts of the squares. A cross cut area significantly greater than 15 %, but not significantly greater than 35 % is affected. |

(continued)

| Score | Observation |
|---|---|
| 4 | The coating has flaked along the edges of the cuts in large ribbons and/or some squares have detached partly or wholly. A cross cut area significantly greater than 35 %, but not significantly greater than 65 % is affected. |
| 5 | Any degree of flaking that cannot be classified even by score 4. |

A summation of the scores in adhesion performance on the different solder masks was made for the radiation curable ink. The smaller this cumulative adhesion score, the better the adhesion of the radiation curable ink on a range of solder masks.

4. Viscosity increase

Storage at high relative humidity was used as an accelerated test for the stability of the ink in the printer. The experiments were performed according to the method described below.
The ink viscosity was measured using a Brookfield DV-II+Pro viscometer at 12 rpm and 45°C.
After storing 7.5 ml of a radiation curable ink for 70 hours in an open vessel at 30°C and a relative humidity 85%, the ink viscosity was measured again using a Brookfield DV-II+Pro viscometer at 12 rpm and 45°C.
The % viscosity increase was calculated as follows:

$$\% \cdot viscosity \cdot increase = \frac{viscosity(after \cdot storage) - viscosity(before \cdot storage)}{viscosity(before \cdot storage)} \times 100\%$$

For a good storage at high relative humidity, the % viscosity increase should be no more than 7%, preferably less than 5%.

**EXAMPLE 1**

This example illustrates the improvement in adhesion and scratch resistance of a white radiation curable inkjet ink in accordance with the present invention on a range of solder masks.

Preparation of White Pigment Dispersion Disp-1

A concentrated white pigment dispersion Disp-1 was prepared having a composition according to Table 5.

**Table 5**

| wt% of : | Disp-1 |
|---|---|
| TR52 | 50.0 |
| DB162 | 10.0 |
| INHIB | 1.0 |
| VEEA | 39.0 |

The concentrated pigment dispersion Disp-1 was made by mixing 3.1 kg of VEEA, 28.5 kg of the white pigment TR52, 0.380 kg of the inhibitor INHIB and 19.0 kg of a 30% solution of the polymeric dispersant DB162 in VEEA for 30 minutes in a 60 L vessel equipped with a DISPERLUX™ disperser (from DISPERLUX S.A.R.L., Luxembourg). This mixture was subsequently milled in a DYNO™-MILL KD 6 from the company WAB Willy A. Bachofen (Switzerland) using 0.65mm yttrium-stabilized zirconium oxide-beads. The bead mill was filled for 52% with the grinding beads and operated in recirculation mode for 1 hour by using a tip speed of 14.7 m/s. The milling chamber is water-cooled during the operation.

Preparation of Pigment Dispersion Disp-2

A concentrated pigment dispersion Disp-2 was prepared having a composition according to Table 6.

**Table 6**

| wt% of : | Disp-2 |
|---|---|
| RM300 | 30.0 |
| DB162 | 10.0 |
| INHIB | 1.0 |
| VEEA | 59.0 |

The concentrated pigment dispersion Disp-2 was made by mixing 3.6 kg of VEEA, 3.0 kg of the pigment RM300, 67 g of the inhibitor INHIB and 3,333 g of a 30% solution of the polymeric dispersant DB162 in VEEA in a vessel of 15 L using a DISPERLUX™ disperser (from DISPERLUX S.A.R.L., Luxembourg). The vessel was then connected to a Bachofen DYNO™-MILL ECM Pilot mill having an internal volume of 1.5 L filled for 42% with 0.4 mm yttrium stabilized zirconia beads ("high wear resistant zirconia grinding media" from TOSOH Co.). The mixture was circulated over the mill for 4 hours and 35 minutes at a flow rate of about 1.5 L per minute and a tip speed in the mill of about 13 m/s.

Preparation of Pigment Dispersion Disp-3

For the radiation curable inks lacking a vinylether (meth)acrylate monomer, a concentrated pigment dispersion Disp-3 was prepared on the basis of phenoxyethyl acrylate (PEA) having a composition according to Table 7.

**Table 7**

| wt% of : | Disp-1 |
|---|---|
| TR52 | 30 |
| DB162 | 10 |
| INHIB | 2 |
| PEA | 58 |

The concentrated pigment dispersion Disp-3 was made by mixing 130.5 kg of PEA, 67.5kg of the white pigment TR52, 4.5 kg of the inhibitor INHIB and 22.5 kg of a 30% solution of the polymeric dispersant DB162 in PEA for 30 minutes in a 270 L vessel. This mixture was subsequently milled in a DYNO™-MILL KD6 from the company Willy A. Bachofen (Switzerland) using 0.40 mm yttrium-stabilized zirconium oxide-beads. The bead mill was filled for 52% with the grinding beads and operated in recirculation mode at a flow rate of 1.5 l/min for 7.5 hours by using a tip speed of 12 m/s. The milling chamber is water-cooled during the operation.

Preparation of Radiation Curable Inkjet Inks

The comparative radiation curable inkjet inks COMP-1 to COMP-5 and the inventive radiation curable inkjet ink INV-1 were prepared according to Table 8. The weight% (wt%) was based on the total weight of the radiation curable inkjet inks.

**Table 8**

| wt% of | COMP-1 | COMP-2 | COMP-3 | COMP-4 | COMP-5 | INV-1 |
|---|---|---|---|---|---|---|
| **Disp-1** | 26.00 | - | - | 26.00 | 26.00 | 26.00 |
| **Disp-2** | 4.80 | - | - | 4.80 | 4.80 | 4.80 |
| **Disp-3** | - | 43.30 | 43.30 | - | - | - |
| **SR355** | 10.00 | 10.00 | 10.00 | 10.00 | 10.00 | 10.00 |
| **TMPTA** | 18.50 | 18.50 | 18.50 | 18.50 | 18.50 | 18.50 |
| **MA** | - | - | 1.50 | 1.50 | - | 1.50 |
| **IA** | - | - | - | - | 1.50 | - |

(continued)

| wt% of | COMP-1 | COMP-2 | COMP-3 | COMP-4 | COMP-5 | INV-1 |
|---|---|---|---|---|---|---|
| **Eb1360** | 0.30 | 0.30 | 0.30 | 0.30 | 0.30 | 0.30 |
| **KTO46** | 4.00 | 4.00 | 4.00 | 4.00 | 4.00 | 4.00 |
| **TPO** | 2.95 | 2.95 | 2.95 | 2.95 | 2.95 | 2.95 |
| **VEEA** | 32.76 | - | - | 31.26 | 31.26 | 29.86 |
| **PEA** | - | 20.26 | 18.76 | - | - | - |
| **Amine-1** | - | - | - | - | - | 1.40 |
| **INHIB** | 0.69 | 0.69 | 0.69 | 0.69 | 0.69 | 0.69 |

Evaluation and Results

The comparative radiation curable inkjet inks COMP-1 to COMP-5 and the inventive radiation curable inkjet ink INV-1 were evaluated for curing sensitivity, pencil hardness, adhesion and storage stability. The results are shown in Table 9.

**Table 9**

| Inkjet ink | Curing sensitivity | Averaged PPH | Cumulative adhesion | % Viscosity increase |
|---|---|---|---|---|
| **COMP-1** | 50 | 6H | 5 | 0% |
| **COMP-2** | 50 | 1H | 20 | 2% |
| **COMP-3** | 50 | 2H | 17 | 2% |
| **COMP-4** | 45 | 7H | 2 | 8% |
| **COMP-5** | 50 | 7H | 2 | 11% |
| **INV-1** | 45 | 7H | 2 | 3% |

From Table 9, it should be clear that all inkjet inks had a comparable curing sensitivity and that only the inkjet inks containing a vinylether acrylate monomer and a maleic or itaconic anhydride exhibited good scratch resistance and adhesion. Only the inventive inkjet ink INV-1 containing also an aliphatic tertiary amine exhibited good storage stability at high relative humidity.

**EXAMPLE 2**

This example illustrates the effectiveness of the aliphatic tertiary amines in controlling the viscosity increase of the radiation curable inks in accordance with the present invention when stored at high relative humidity.

Preparation of Radiation Curable Inkjet Inks

The comparative radiation curable inkjet ink COMP-6 and the inventive radiation curable inkjet inks INV-2 to INV-6 were prepared according to Table 10 using the same vinylether acrylate monomer containing pigment dispersions Disp-1 and Disp-2 of Example 1. The weight% (wt%) was based on the total weight of the radiation curable inkjet ink.

**Table 10**

| w% of | COMP-6 | INV-2 | INV-3 | INV-4 | INV-5 | INV-6 |
|---|---|---|---|---|---|---|
| **Disp-1** | 26.00 | 26.00 | 26.00 | 26.00 | 26.00 | 26.00 |
| **Disp-2** | 4.8 | 4.8 | 4.8 | 4.8 | 4.8 | 4.8 |
| **SR355** | 10.00 | 10.00 | 10.00 | 10.00 | 10.00 | 10.00 |
| **TMPTA** | 18.5 | 18.5 | 18.5 | 18.5 | 18.5 | 18.5 |

(continued)

| w% of | COMP-6 | INV-2 | INV-3 | INV-4 | INV-5 | INV-6 |
|---|---|---|---|---|---|---|
| MA | 1.5 | 1.5 | 1.5 | 1.5 | 1.5 | 1.5 |
| Amine-1 | - | 0.75 | 1.00 | 1.85 | 2.8 | 3.7 |
| Eb1360 | 0.3 | 0.3 | 0.3 | 0.3 | 0.3 | 0.3 |
| KTO46 | 4.00 | 4.00 | 4.00 | 4.00 | 4.00 | 4.00 |
| TPO | 2.95 | 2.95 | 2.95 | 2.95 | 2.95 | 2.95 |
| VEEA | 31.26 | 30.51 | 30.26 | 29.41 | 28.46 | 27.56 |
| INHIB | 0.69 | 0.69 | 0.69 | 0.69 | 0.69 | 0.69 |

Evaluation and results

The comparative radiation curable inkjet ink COMP-6 and the inventive radiation curable inkjet inks INV-2 to INV-6 were evaluated for curing sensitivity, pencil hardness, adhesion and storage stability. The results are shown in Table 11.

**Table 11**

| Inkjet Ink | Curing sensitivity | Averaged PPH | Cumulative adhesion | % Viscosity increase |
|---|---|---|---|---|
| COMP-6 | 50 | 7H | 2 | 56% |
| INV-2 | 45 | 7H | 0 | 7% |
| INV-3 | 45 | 8H | 0 | 0% |
| INV-4 | 40 | 8H | 3 | 0% |
| INV-5 | 40 | 8H | 0 | 0% |
| INV-6 | 40 | 8H | 0 | 0% |

Table 11 shows that higher concentrations of an aliphatic tertiary amine not only improve the storage stability at high relative humidity, but also appears to further improve scratch resistance and adhesion.

**EXAMPLE 3**

This examples illustrates that a broad scope of aliphatic tertiary amines can be used to guarantee the shelf life of a radiation curable ink according to the present invention.

Preparation of Radiation Curable Inkjet Inks

The inventive radiation curable inkjet inks INV-7 to INV-13 were prepared according to Table 12 using the same vinylether acrylate monomer containing pigment dispersions Disp-1 and Disp-2 of Example 1. The weight% (wt%) was based on the total weight of the radiation curable inkjet ink. All aliphatic tertiary amines were added in equimolar amounts.

**Table 12**

| wt% of | INV-7 | INV-8 | INV-9 | INV-10 | INV-11 | INV-12 | INV-13 |
|---|---|---|---|---|---|---|---|
| Disp-1 | 26.00 | 26.00 | 26.00 | 26.00 | 26.00 | 26.00 | 26.00 |
| Disp-2 | 4.80 | 4.80 | 4.80 | 4.80 | 4.80 | 4.80 | 4.80 |
| SR355 | 10.00 | 10.00 | 10.00 | 10.00 | 10.00 | 10.00 | 10.00 |
| TMPTA | 18.50 | 18.50 | 18.50 | 18.50 | 18.50 | 18.50 | 18.50 |
| MA | 1.50 | 1.50 | 1.50 | 1.50 | 1.50 | 1.50 | 1.50 |

(continued)

| wt% of | INV-7 | INV-8 | INV-9 | INV-10 | INV-11 | INV-12 | INV-13 |
|---|---|---|---|---|---|---|---|
| Amine-5 | 3.00 | - | - | - | - | - | - |
| Amine-6 | - | 2.30 | - | - | - | - | - |
| Amine-7 | - | - | 1.20 | - | - | - | - |
| Amine-8 | - | - | - | 2.70 | - | - | - |
| Amine-9 | - | - | - | - | 2.70 | - | - |
| Amine-10 | - | - | - | - | - | 2.90 | - |
| Amine-11 | - | - | - | - | - | - | 2.20 |
| Eb1360 | 0.30 | 0.30 | 0.30 | 0.30 | 0.30 | 0.30 | 0.30 |
| KTO46 | 4.00 | 4.00 | 4.00 | 4.00 | 4.00 | 4.00 | 4.00 |
| TPO | 2.95 | 2.95 | 2.95 | 2.95 | 2.95 | 2.95 | 2.95 |
| VEEA | 28.26 | 28.96 | 30.06 | 28.56 | 28.56 | 28.36 | 29.06 |
| INHIB | 0.69 | 0.69 | 0.69 | 0.69 | 0.69 | 0.69 | 0.69 |

Evaluation and Results

The inventive radiation curable inkjet inks INV-7 to INV-13 were evaluated for curing sensitivity, pencil hardness, adhesion and storage stability. The results are shown in Table 13.

**Table 13**

| Inkjet Ink | Curing sensitivity | Averaged PPH | Cumulative adhesion | % Viscosity increase |
|---|---|---|---|---|
| INV-7 | 45 | 7H | 1 | 3% |
| INV-8 | 40 | 7H | 2 | 0% |
| INV-9 | 40 | 6H | 6 | 0% |
| INV-10 | 45 | 7H | 1 | 0% |
| INV-11 | 45 | 6H | 7 | 0% |
| INV-12 | 45 | 6H | 5 | 0% |
| INV-13 | 45 | 7H | 0 | 0% |

From Table 13, it becomes apparent that a broad set of aliphatic tertiary amines is capable of controlling the viscosity increase in the radiation curable inks according to the present invention, without negative impact on curing speed, pencil hardness or adhesion performance.

## Claims

**1.** A radiation curable ink containing:

a) a monomer including at least one vinyl ether group and at least one (meth)acrylate group;
b) a monomer including a five membered cyclic anhydride curable by free radical polymerization; and
c) an aliphatic tertiary amine.

**2.** The radiation curable ink according to claim 1, wherein the monomer including at least one vinyl ether group and at least one (meth)acrylate group is a monomer according to Formula (II) :

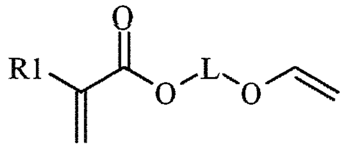

Formula (II),

wherein

R1 represents hydrogen or a methyl group; and
L represents a divalent linking group comprising at least two carbon atoms.

3. The radiation curable ink according to claim 1 or 2, wherein the monomer including a five membered cyclic anhydride is selected from the group consisting of an itaconic anhydride derivative and a maleic anhydride derivative.

4. The radiation curable ink according to claim 3, wherein the monomer including a five membered cyclic anhydride is selected from the group consisting of itaconic anhydride and maleic anhydride.

5. The radiation curable ink according to any one of claims 1 to 4, wherein the radiation curable ink includes a colorant.

6. The radiation curable ink according to claim 5, wherein the colorant is a white pigment with a refractive index greater than 1.60.

7. The radiation curable ink according to any one of claims 1 to 6, wherein the radiation curable ink one or more photoinitiators selected from the group consisting of acyl phosphine oxide photoinitiators, aromatic $\alpha$-hydroxy ketones and benzophenone photoinitiators.

8. The radiation curable ink according to any one of claims 1 to 7, wherein the monomer including a five membered cyclic anhydride is present in a concentration between 0.5 wt% and 5.0 wt% based on the total weight of the radiation curable ink.

9. The radiation curable ink according to any one of claims 1 to 8, wherein the monomer having at least one (meth)acrylate group and at least one vinylether group is present in a concentration between 20 wt% and 80 wt% based on the total weight of the radiation curable ink.

10. The radiation curable ink according to any one of claims 1 to 9, wherein the aliphatic tertiary amine is present in a concentration between 0.75 wt% and 3 wt% based on the total weight of the radiation curable ink.

11. The radiation curable ink according to any one of claims 1 to 10, wherein the radiation curable ink is an inkjet ink.

12. An inkjet printing method including the steps of:

1) jetting on a substrate a radiation curable ink containing:

a) a monomer including at least one vinyl ether group and at least one (meth)acrylate group;
b) a monomer including a five membered cyclic anhydride curable by free radical polymerization ; and
c) an aliphatic tertiary amine; and

2) curing the jetted radiation curable ink.

13. The inkjet printing method according to claim 12, wherein the substrate is a solder mask.

14. The inkjet printing method according to claim 12 or 13, wherein the curing is performed using ultraviolet radiation.

15. Use of a radiation curable ink according to any one of claims 1 to 11 for improving adhesion and scratch resistance of a legend on a solder mask.

## Patentansprüche

1. Eine strahlungshärtbare Tinte, enthaltend:

   a) ein Monomer, das mindestens eine Vinylethergruppe und mindestens eine (Meth)acrylatgruppe umfasst,
   b) ein Monomer, das ein fünfgliedriges, cyclisches, durch freiradikalische Polymerisation härtbares Anhydrid umfasst, und
   c) ein aliphatisches tertiäres Amin.

2. Die strahlungshärtbare Tinte nach Anspruch 1, wobei das Monomer, das mindestens eine Vinylethergruppe und mindestens eine (Meth)acrylatgruppe umfasst, ein Monomer gemäß Formel (II) ist:

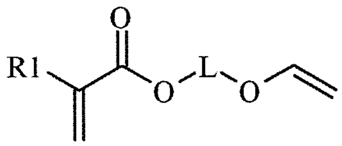

Formel (II),

in der

   R1 Wasserstoff oder eine Methylgruppe bedeutet, und
   L eine divalente Verbindungsgruppe mit mindestens zwei Kohlenstoffatomen bedeutet.

3. Die strahlungshärtbare Tinte nach Anspruch 1 oder 2, wobei das Monomer, das ein fünfgliedriges cyclisches Anhydrid umfasst, aus der Gruppe bestehend aus einem Itakonsäureanhydrid-Derivat und einem Maleinsäureanhydrid-Derivat gewählt wird.

4. Die strahlungshärtbare Tinte nach Anspruch 3, wobei das Monomer, das ein fünfgliedriges cyclisches Anhydrid umfasst, aus der Gruppe bestehend aus Itakonsäureanhydrid und Maleinsäureanhydrid gewählt wird.

5. Die strahlungshärtbare Tinte nach einem der Ansprüche 1 bis 4, wobei die strahlungshärtbare Tinte ein Farbmittel enthält.

6. Die strahlungshärtbare Tinte nach Anspruch 5, wobei das Farbmittel ein weißes Pigment mit einem Brechungsindex von mehr als 1,60 ist.

7. Die strahlungshärtbare Tinte nach einem der Ansprüche 1 bis 6, wobei die strahlungshärtbare Tinte einen oder mehrere Fotoinitiatoren, ausgewählt aus der Gruppe bestehend aus Acylphosphinoxid-Fotoinitiatoren, aromatischen $\alpha$-Hydroxyketonen und Benzophenon-Fotoinitiatoren, enthält.

8. Die strahlungshärtbare Tinte nach einem der Ansprüche 1 bis 7, wobei das Monomer, das ein fünfgliedriges cyclisches Anhydrid umfasst, in einem Verhältnis zwischen 0,5 Gew.-% und 5,0 Gew.-%, bezogen auf das Gesamtgewicht der strahlungshärtbaren Tinte, enthalten ist.

9. Die strahlungshärtbare Tinte nach einem der Ansprüche 1 bis 8, wobei das Monomer, das mindestens eine (Meth)acrylatgruppe und mindestens eine Vinylethergruppe enthält, in einem Verhältnis zwischen 20 Gew.-% und 80 Gew.-%, bezogen auf das Gesamtgewicht der strahlungshärtbaren Tinte, enthalten ist.

10. Die strahlungshärtbare Tinte nach einem der Ansprüche 1 bis 9, wobei das aliphatische tertiäre Amin in einem Verhältnis zwischen 0,75 Gew.-% und 3 Gew.-%, bezogen auf das Gesamtgewicht der strahlungshärtbaren Tinte, enthalten ist.

11. Die strahlungshärtbare Tinte nach einem der Ansprüche 1 bis 10, wobei die strahlungshärtbare Tinte einen Tintenstrahltinte ist.

12. Ein Tintenstrahldruckverfahren, das die folgenden Schritte umfasst:

1) Aufspritzen auf ein Substrat von einer strahlungshärtbaren Tinte, enthaltend:

a) ein Monomer, das mindestens eine Vinylethergruppe und mindestens eine (Meth)acrylatgruppe umfasst,
b) ein Monomer, das ein fünfgliedriges, cyclisches, durch freiradikalische Polymerisation härtbares Anhydrid umfasst, und
c) ein aliphatisches tertiäres Amin, und

2) Härten der aufgespritzten strahlungshärtbaren Tinte.

**13.** Das Tintenstrahldruckverfahren nach Anspruch 12, wobei das Substrat eine Lötstoppmaske ist.

**14.** Das Tintenstrahldruckverfahren nach Anspruch 12 oder 13, wobei die Härtung mittels Ultraviolettstrahlung erfolgt.

**15.** Verwendung einer strahlungshärtbaren Tinte nach einem der Ansprüche 1 bis 11 zur Verbesserung der Haftung und Kratzfestigkeit eines Bestückungsdrucks auf einer Lötstoppmaske.

## Revendications

**1.** Encre durcissable par rayonnement contenant:

a) un monomère comprenant au moins un groupe éther vinylique et au moins un groupe (méth)acrylate,
b) un monomère comprenant un anhydride cyclique pentagonal durcissable par polymérisation radicalaire, et
c) une amine tertiaire aliphatique.

**2.** Encre durcissable par rayonnement selon la revendication 1, **caractérisée en ce que** ledit monomère comprenant au moins un groupe éther vinylique et au moins un groupe (méth)acrylate est un monomère répondant à la Formule (II):

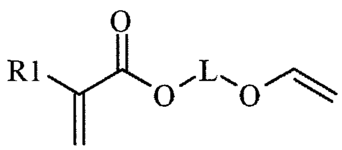

Formule (II),

où

R1 représente un atome d'hydrogène ou un groupe méthyle, et
L représente un groupe de liaison divalent comprenant au moins deux atomes de carbone.

**3.** Encre durcissable par rayonnement selon la revendication 1 ou 2, **caractérisée en ce que** ledit monomère comprenant un anhydride cyclique pentagonal est choisi parmi le groupe composé d'un dérivé d'anhydride itaconique et d'un dérivé d'anhydride maléique.

**4.** Encre durcissable par rayonnement selon la revendication 3, **caractérisée en ce que** ledit monomère comprenant un anhydride cyclique pentagonal est choisi parmi le groupe composé d'anhydride itaconique et d'anhydride maléique.

**5.** Encre durcissable par rayonnement selon l'une quelconque des revendications 1 à 4, **caractérisée en ce que** l'encre durcissable par rayonnement contient une matière colorante.

**6.** Encre durcissable par rayonnement selon la revendication 5, **caractérisée en ce que** ladite matière colorante est un pigment blanc ayant un indice de réfraction supérieur à 1,60.

**7.** Encre durcissable par rayonnement selon l'une quelconque des revendications 1 à 6, **caractérisée en ce que** l'encre durcissable par rayonnement contient un ou plusieurs photoinitiateurs choisi(s) parmi le groupe composé de photoinitiateurs d'oxyde d'acylphosphine, de $\alpha$-hydroxycétones aromatiques et de photoinitiateurs de benzophénone.

**8.** Encre durcissable par rayonnement selon l'une quelconque des revendications 1 à 7, **caractérisée en ce que** ledit monomère comprenant un anhydride cyclique pentagonal est présent dans un rapport compris entre 0,5% en poids et 5,0% en poids par rapport au poids total de l'encre durcissable par rayonnement.

**9.** Encre durcissable par rayonnement selon l'une quelconque des revendications 1 à 8, **caractérisée en ce que** ledit monomère comprenant au moins un groupe (méth)acrylate et au moins un groupe éther vinylique est présent dans un rapport compris entre 20% en poids et 80% en poids par rapport au poids total de l'encre durcissable par rayonnement.

**10.** Encre durcissable par rayonnement selon l'une quelconque des revendications 1 à 9, **caractérisée en ce que** ladite amine tertiaire aliphatique est présente dans un rapport compris entre 0,75% en poids et 3% en poids par rapport au poids total de l'encre durcissable par rayonnement.

**11.** Encre durcissable par rayonnement selon l'une quelconque des revendications 1 à 10, **caractérisée en ce que** l'encre durcissable par rayonnement est une encre pour impression à jet d'encre.

**12.** Procédé d'impression à jet d'encre comprenant les étapes consistant à:

1) projeter sur un substrat une encre durcissable par rayonnement contenant:

a) un monomère comprenant au moins un groupe éther vinylique et au moins un groupe (méth)acrylate,
b) un monomère comprenant un anhydride cyclique pentagonal durcissable par polymérisation radicalaire, et
c) une amine tertiaire aliphatique, et

2) durcir l'encre durcissable par rayonnement projetée sur le substrat.

**13.** Procédé d'impression à jet d'encre selon la revendication 12, **caractérisé en ce que** le substrat est un masque de soudure.

**14.** Procédé d'impression à jet d'encre selon la revendication 12 ou 13, **caractérisé en ce que** le durcissement s'effectue par exposition à du rayonnement ultraviolet.

**15.** Utilisation d'une encre durcissable par rayonnement selon l'une quelconque des revendications 1 à 11 afin d'améliorer l'adhésion et la résistance aux rayures d'un marquage sur un masque de soudure.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0246323 A
- WO 2006035679 A
- KR 20090084057
- US 2012189822 A
- EP 1911814 A
- EP 2065362 A
- EP 2161264 A
- EP 2053101 A
- US 2006014848 A
- WO 2008074548 A
- WO 2011069943 A


### Non-patent literature cited in the description


- **CRIVELLO, J.V. et al.** Photoinitiators for Free Radical Cationic & Anionic Photopolymerisation. John Wiley and Sons Ltd, 1998, vol. III, 287-294
- **HERBST, WILLY et al.** Industrial Organic Pigments, Production, Properties, Applications. Wiley - VCH, 2004